# EUROPÄISCHE PATENTSCHRIFT

(11) **EP 2 730 763 B1**
(45) Veröffentlichungstag und Bekanntmachung des Hinweises auf die Patenterteilung: **19.04.2017**
(21) Anmeldenummer: 13004643.6
(22) Anmeldetag: 25.09.2013
(51) Int. Cl.: F01N 13/00, F02D 41/14

(54) **Verfahren und Vorrichtung zum Betrieb eines Sensors zur Bestimmung von Abgaskomponenten, insbesondere für ein Kraftfahrzeug**
Method and apparatus for the operation of a sensor for determination of exhaust gas components, in particular for a motor vehicle
Procédé et dispositif de fonctionnement d'un capteur pour la détermination de composants des gaz d'échappement, notamment pour un véhicule automobile

(30) Priorität: 09.11.2012 DE 102012021929
(43) Veröffentlichungstag der Anmeldung: 14.05.2014
(73) Patentinhaber: MAN Truck & Bus AG, 80995 München (DE)
(72) Erfinder: Döring, Andreas, 82008 München (DE)

(56) Entgegenhaltungen:
- DE-A1- 19 524 018
- DE-A1-102007 038 516
- US-A1- 2005 262 833
- US-B1- 7 610 142

## Beschreibung

Die Erfindung betrifft ein Verfahren zum Betrieb eines Sensors, insbesondere eines NOₓ-Sensors, zur Bestimmung von Abgaskomponenten, insbesondere für ein Kraftfahrzeug, gemäß dem Oberbegriff des Patentanspruchs 1 sowie eine Vorrichtung zum Betrieb eines derartigen Sensors nach Oberbegriff des Patentanspruchs 12.

Neben Feststoffpartikeln gehören Stickoxyde zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide kann mittels katalytischen Systemen erfolgen, wobei in sauerstoffreichem Abgas zusätzlich Reduktionsmittel eingesetzt werden. Diese Verfahren sind unter dem Sammelbegriff SCR-Verfahren bekannt, wobei SCR für "selektive katalytische Reduktion" steht. Eine ausführliche Darstellung solcher Verfahren ist der DE 34 28 232 A1 zu entnehmen.

Als Reduktionsmittel kommen in der praktischen Anwendung Ammoniak oder Ammoniak abspaltende Verbindungen, wie Harnstoff oder Ammoniumformiat, in fester oder Lösungsform zum Einsatz.

Um eine effektive katalytische Reduktion, beispielsweise mit gezielter Zugabe von Harnstoff, durchführen zu können, ist es erforderlich, mittels NOₓ-Sensoren eine Bestimmung der NOₓ-Emissionen vorzunehmen. In der DE 101 00 420 A1 ist ein Verfahren zur Steuerung eines Abgasnachbehandlungssystems beschrieben, bei dem abhängig vom Zustand der Brennkraftmaschine und/oder des Abgasnachbehandlungssystems eine vorgebbare Menge an Reduktionsmittel zugeführt wird.

Die verwendeten NOₓ-Sensoren sind sehr empfindlich gegenüber Alkali- und Erdalkalimetallen, durch die sie irreversibel geschädigt werden. Alkali- und Erdalkalimetalle gelangen über den Kraftstoff und das Motorenöl ins Abgas und von dort in Kontakt mit den NOₓ-Sensoren, die im Abgassystem angeordnet sind. Insbesondere bei der Verwendung von Schweröl, wie es bei großen Schiffsmotoren Verwendung findet, gelangen große Metallmengen in das Abgassystem, die zu einer Schädigung der dort verbauten NOₓ-Sensoren führen.

Aus der US 2005/0262833 A1 ist ein Verfahren zum Betrieb eines NOx-Sensors bekannt, bei dem der NOx-Sensor nur zeitweise dem Abgasstrom in einer Bypassleitung eines Abgaskanals ausgesetzt ist. In Messpausen wird eine Verbindung zur Umgebungsluft hergestellt.

US7610142 lehrt ein selbstkalibrierendes Sensorsystem wobei ein Fahrzeug einen Motor, einen Luftverdichter, einen Abgassensor und eine Selbstkalibrierungsanordnung für den Abgassensor enthält. Wenn eine Kontrolle der Sensorkalibrierung gewünscht wird, öffnet eine Steuereinheit ein Ventil, um ein Fühlerelement des Sensors einem zugeführten Gas mit bekannter Gaskonzentration auszusetzen. Gaskonzentrations-Signale vom Sensor werden mit Werten der bekannten Konzentration verglichen, wobei die Ergebnisse zur Neukalibrierung des Sensors dienen.

Der Erfindung liegt die Aufgabe zugrunde, ein möglichst effektives Verfahren zum Betrieb eines Sensors zur Bestimmung von Abgaskomponenten, insbesondere zur Bestimmung von NOₓ, in einem Abgassystem einer Brennkraftmaschine, insbesondere einer Brennkraftmaschine eines Kraftfahrzeugs anzugeben, mit dem die Lebensdauer des Sensors verlängert werden kann.

Die Lösung dieser Aufgabe erhält man mit den im Patentanspruch 1 angegebenen Merkmalen. Besonders vorteilhafte Weiterbildungen des erfindungsgemäßen Verfahrens sind in den Unteransprüchen offenbart.

Gemäß Patentanspruch 1 ist vorgesehen, dass ein den Sensor, insbesondere einen NOx-Sensor, umgebender Messraum unmittelbar nach einer Messphase mit einem unter Druck stehenden Spülgas beaufschlagt wird, wodurch das im Messraum vorhandene Abgas aus dem Messraum in den Abgasstrom verdrängt wird. Der Abgasstrom wirkt nur während vorgegebener Messphasen auf den Sensor, zum Beispiel einen NOₓ-Sensor, wobei der Sensor zwischen den Messphasen von Abgas befreit wird. Die Dauer und/oder die Häufigkeit der Messphasen sind dabei vorzugsweise in Abhängigkeit von Betriebsparametern der Brennkraftmaschine einstellbar. Bei Brennkraftmaschinen, die über längere Zeiträume mit konstanter Last und Drehzahl betrieben werden, sind Messphasen in größeren Zeitabständen ausreichend, so dass für verhältnismäßig große Zeiträume zwischen den Messphasen der Sensor keiner Abgasbelastung ausgesetzt ist, wodurch eine erhebliche Steigerung seiner Lebensdauer erreicht wird. Befindet sich dagegen eine Brennkraftmaschine in einem veränderlichen Betriebszustand, also im nicht stationären Betrieb, können kurz hintereinander auftretende Messphasen vorgesehen werden. Grundsätzlich besteht aber auch die Möglichkeit, die vorgesehenen Messphasen so lange auszudehnen, dass kritische Betriebszustände durchgängig von dem Sensor überwacht werden. Damit kann das Verfahren zum Betrieb eines Sensors an die jeweiligen Anforderungen so angepasst werden, dass die zur Abgasnachbehandlung erforderlichen Messdaten auch bei unterschiedlichen Betriebszuständen einer Brennkraftmaschine sicher und umfassend ermittelt werden.

Dabei ist es besonders vorteilhaft, dass der Sensor zwischen den Messphasen, insbesondere in kurzen Messpausen, in denen er dem Abgasstrom nicht ausgesetzt ist, mit einem Spülgas, vorzugsweise mit Luft, von dem ihn umgebenden Abgas befreit wird. Damit wird sichergestellt, dass in den Messpausen möglichst keine schädlichen Abgasbestandteile auf den Sensor einwirken und eine Verbesserung der Langzeiteigenschaften erreicht wird.

Bei dem erfindungsgemäßen Verfahren kann auch vorgesehen sein, dass in Kalibrierphasen Kalibriergas in einen den Sensor umgebenden Messraum eingespeist wird. Diese Kalibrierung kann in größeren Zeitabständen vorgenommen werden, um beispielsweise betriebsdauerabhängige Veränderungen der Messeigenschaften durch eine Kalibrierung des Sensors ausgleichen zu können.

Die Zufuhr von Spülgas zum Sensor kann mittels eines Gebläses oder eines Kompressors erfolgen. Wird als Spülgas Luft eingesetzt, kann diese Luft dem Luftstrom eines Verdichters entnommen werden, insbesondere wenn dieser ohnehin zur Aufladung der Brennkraftmaschine vorhanden ist.

Die Dauer und/oder die Häufigkeit der Messphasen kann auch in Abhängigkeit des Abgassystems der Brennkraftmaschine erfolgen, wobei bevorzugt der Zustand des Gesamtsystems zur Steuerung der Dauer und/oder der Häufigkeit der Messphasen herangezogen wird. Durch die Berücksichtigung unterschiedlicher Parameter des Gesamtsystems, kann eine sehr exakte Bestimmung der Dauer und/oder der Häufigkeit der Messphasen erfolgen, um einerseits aussagekräftige und möglichst exakte Messergebnisse zu erhalten, und andererseits aber nicht unnötig lange und häufig auftretende Messphasen vorzusehen. Damit kann in optimaler Weise eine hohe Messgenauigkeit und eine lange Lebensdauer für den Sensor erreicht werden.

Bei der Überwachung des Gesamtsystems zur Bestimmung der Dauer und Häufigkeit der Messphasen können jeweils aktuelle oder auch differenzierte Parameter der Brennkraftmaschine, wie Einspritzdruck, Spritzbeginn, Ladedruck, Ladelufttemperatur, Anzahl der befeuerten Zylinder, Turboladerdrehzahl, Rohemissionen, Anzahl der Einspritzungen, und/oder des Abgassystems, wie Abgastemperaturen, Katalysatortemperaturen, verwendeter Kraftstoff, zugeführte Reduktionsmittelmenge, berücksichtigt werden.

Um in den Messphasen den Sensor möglichst schnell mit Abgas zu beaufschlagen, kann es zweckmäßig sein, während der Messphasen Abgas in Richtung des Sensors anzusaugen. Dies kann über eine strömungstechnische Verbindung zwischen dem Messraum und der Frischluftsaugseite des Brennkraftmotors, stromab des Frischluftfilters und stromauf eines eventuell vorhandenen Verdichters, vorgesehen werden. Auf Grund des an dieser Stelle während des Betriebs vorherrschenden Unterdrucks, wird Abgas in den Messraum und anschließend in den Frischlufttrakt gesaugt. Um dabei zu vermeiden, dass es auf Grund von Schwefelverbindungen, wie Schwefelsäure oder schwefeliger Säure, zu Korrosion am Motor kommt, kann in diese strömungstechnische Verbindung zwischen dem Messraum und der Frischluftsaugseite des Brennkraftmotors eine Schwefelfalle integriert werden, um Schwefeloxide aus dem Abgas herauszufiltern.

Gemäß einer besonders bevorzugten Ausführungsform wird vorgeschlagen, die Ansaugung von Abgas in den Messraum mit Hilfe einer Strahlpumpe (oftmals auch als Ejektor oder Jetpumpe bezeichnet) oder Venturidüse zu bewerkstelligen und als Treibmedium Druckluft oder, bei aufgeladenen Brennkraftmaschinen, komprimierte Ladeluft einzusetzten. Mit Hilfe des Treibmittels (Ladeluft oder Druckluft aus jeder anderen geeigneten Druckmittelquelle) kann Abgas in den Messraum gesaugt werden, indem der Messraum fluidtechnisch mit der Saugseite der Luftstrahlpumpe oder der Venturidüse verbunden wird.

Der Erfindung liegt die weitere Aufgabe zugrunde, eine Vorrichtung zum Betrieb eines Sensors, insbesondere eines NOₓ-Sensors, in einem Abgassystem zu schaffen, mit der eine den Sensor schonende Betriebsweise möglich ist.

Die Lösung dieser weiteren Aufgabe erhält man mit den Merkmalen des Patentanspruchs 12. Besonders vorteilhafte Weiterbildungen der erfindungsgemäßen Vorrichtung sind in den darauf rückbezogenen Unteransprüchen offenbart.

Gemäß dem Patentanspruch 12 ist der Sensor in einem Messraum angeordnet, der zum Abgaskanal der Brennkraftmaschine eine Abschirmvorrichtung hat, wobei mittels einer Zuführeinrichtung, vorzugsweise mittels einer Pumpe, eines Verdichters oder eines sonstigen Druckerzeugers, Spülgas über einen Gaskanal in den Messraum einleitbar ist. Die Abschirmvorrichtung dient in diesem Zusammenhang dazu, dass das in den Messraum in Messpausen eingeleitete Spülgas im Messraum vorhandenes Abgas aus dem Messraum verdrängt, so dass der Sensor in den Messpausen frei von schädlichen Einflüssen, die von Abgasbestandteilen ausgehen, ist. Damit ergibt sich ein insgesamt sehr schonender Betrieb für den Sensor, der somit eine deutlich längere Lebensdauer hat, als wenn der Sensor ständig den schädlichen Abgasbestandteilen ausgesetzt wäre.

Als Abschirmvorrichtung kann eine gasdurchlässige Membran dienen, die eine gasdurchlässige Abschirmung zwischen einem Messraum und einem daran angrenzenden Abgaskanal darstellt. Die gasdurchlässige Membran erstreckt sich somit über eine den Messraum mit dem Abgaskanal verbindende Öffnung. Wird nun in den Messraum Spülgas eingeleitet, so verdrängt das Spülgas das im Messraum befindliche Abgas durch die gasdurchlässige Membran, wodurch sich der Sensor in einer Messpause befindet. Wird nun die Einleitung von Spülgas in den Messraum beendet, kann Abgas wieder in den Messraum eindringen, so dass eine Messung durchgeführt werden kann.

Der Messraum kann aber auch als vollständig vom Abgasstrom abtrennbarer Messraum ausgebildet sein, der nur während der Messphasen zur Einleitung von Abgas geöffnet wird. Ein solcher Messraum kann durch zwei konzentrisch angeordnete, perforierte Zylinder gebildet werden, die durch ein gegenseitiges Verdrehen für den Abgasstrom durchlässig, oder undurchlässig sind. Die Ausbildung eines Messraums mittels zweier konzentrischer Zylinder ergibt einen sehr einfachen und betriebssicheren Aufbau für einen vom Abgasstrom absperrbaren Messraum.

An den Messraum kann eine Ansaugvorrichtung angeschlossen sein, die während einer Messphase Abgas in den Messraum ansaugt. Vorzugsweise erfolgt die Ansaugung über eine strömungstechnische Verbindung zwischen Messraum und der Frischluftsaugseite des Motors.

Damit keine Schwefelverbindungen aus dem Abgas über die Frischluftsaugseite des Motors aus dem Messraum zum Motor angesaugt werden, kann eine Filterkartusche zwischen Messraum und Frischluftsaugseite des Motors angeordnet sein. Eine solche Filterkartusche kann auch als Schwefelfalle bezeichnet werden, die zur Bindung von Schwefeloxiden aus dem Abgas geeignete Verbindungen, wie Ca(OH)₂, Aktivkohle oder CaO, enthält.

Die Messkammer, in der sich der Sensor befindet, kann in sehr vorteilhafter Weise auch über einen Gaskanal mit einem Kalibriergas beaufschlagt werden, das eine definierte Konzentration hat. Damit kann der Sensor in vorzugsweise größeren Zeitabständen kalibriert werden, um einen Ausgleich der so genannten Sensordrift aufgrund von Langzeiteinflüssen zu erreichen. Der vom Abgaskanal abschirmbare Messraum hat dabei ebenfalls den Vorteil, dass nur kleine Mengen an Kalibriergas erforderlich sind, um den entsprechend kleindimensionierten Messraum mit Kalibriergas zu füllen.

Die Erfindung wird nachfolgend anhand von in der Zeichnung dargestellten Ausführungsbeispielen näher erläutert.

Es zeigen:
- Fig. 1: eine schematische Darstellung einer Brennkraftmaschine mit einem Abgasnachbehandlungssystem, an das ein Sensor angeschlossen ist,
- Fig. 2a: die Anordnung eines Sensors in einer sich an einen Abgaskanal anschließenden Messraum,
- Fig. 2b: die Anordnung eines Sensors in einer sich an einen Abgaskanal anschließenden Messraum gemäß einer alternativen Ausgestaltung,
- Fig. 3: einen in einem Abgaskanal gebildeten Messraum mit einem Sensor,
- Fig. 4: eine Schnittansicht entlang der Schnittlinie AA im Bereich des Messraums von Figur 3, der von zwei ineinander angeordneten Zylindern gebildet wird, und
- Fig. 5: eine Schnittansicht entlang der Schnittlinie AA wie bei Figur 4, jedoch mit einem um 90 Grad gedrehtem inneren Zylinder.

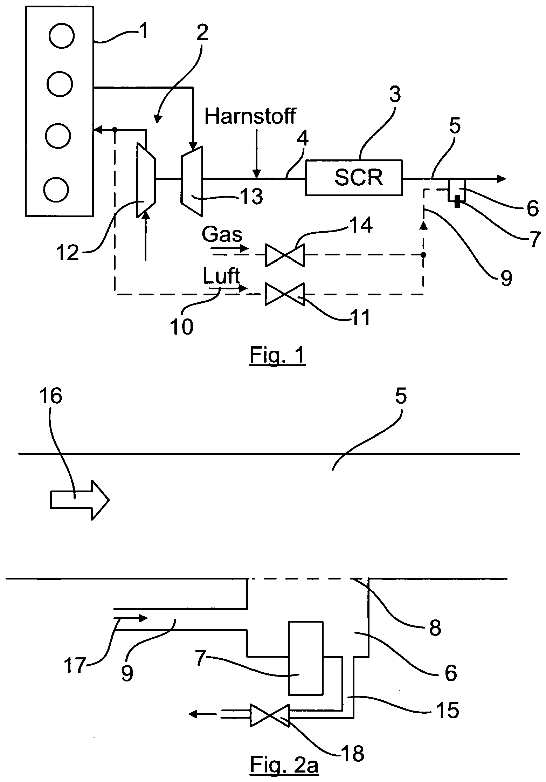

In Figur 1 ist beispielhaft eine Brennkraftmaschine 1 mit einem Abgasturbolader 2 dargestellt, an den eine zu einem SCR-Katalysator 3 führender Abgaskanal 4 angeschlossen ist. Stromab des SCR-Katalysators 3 befindet sich ein Abgaskanal 5, an den ein Messraum 6 mit einem NOₓ-Sensor 7 angrenzt. Als Reduktionsmittel kann zum Beispiel eine Ammoniak abspaltende Verbindung, wie Harnstoff oder Ammoniumformiat, in fester Form oder in Lösungsform stromauf des SCR-Katalysators 3 zugeführt werden.

Der Messraum 6 ist, wie in Figur 2a im Detail dargestellt, strömungstechnisch mit dem Abgaskanal 5 über eine gasdurchlässige Membran 8 verbunden. Um Spülgas, Luft oder ein Kalibriergas in den Messraum 6 einleiten zu können, ist an den Messraum 6 eine Gasleitung 9 angeschlossen, über die beispielsweise Luft gemäß der Pfeilrichtung 10 über ein steuerbares Ventil 11 als Spülgas eingespeist werden kann. Die Luft wird ausgangsseitig eines zum Turbolader 2 gehörenden Verdichters 12 abgezweigt und gelangt bei geöffnetem Ventil 11 in den Messraum 6. Der Verdichter 12 dient hier als Druckerzeuger und ist Teil des Abgasturboladers 2, der vom Abgas der Brennkraftmaschine 1 über die Turbine 13 des Turboladers 2 angetrieben wird.

Im Ausführungsbeispiel von Figur 1 kann über ein zweites steuerbares Ventil 14 ein Kalibriergas über die Gasleitung 9 in den Messraum 6 eingespeist werden. In diesem Fall ist das Ventil 11 geschlossen. Das Kalibriergas besitzt eine vorgegebene NOₓ-Konzentration, wodurch beispielsweise ein Korrekturfaktor für den NOₓ-Sensor ermittelt werden kann, wenn der vom NOₓ-Sensor ermittelte Messwert von dem tatsächlichen Wert der eingespeisten NOₓ-Konzentration abweicht.

In Figur 2a ist der Bereich, wo der Messraum 6 an den Abgaskanal 5 angrenzt, vergrößert dargestellt. In den Messraum 6 ragt ein mit einem nicht näher dargestellten Messsystem elektrisch verbundener NOₓ-Sensor 7 hinein. Außerdem sind an dem Messraum die in Figur 1 dargestellte Gasleitung 9 und eine weitere Saugleitung 15 angeschlossen. Der Messraum 6 ist durch eine Abschirmvorrichtung bildende gasdurchlässige Membran 8 vom Abgasstrom, der in Pfeilrichtung 16 den Abgaskanal 5 durchströmt, teilweise abgeschirmt.

Wird in den Messraum 6 über die Gasleitung 9 Luft bzw. ein sonstiges Spülgas gemäß der Pfeilrichtung 17 eingespeist, wobei die Saugleitung 15 durch ein geschlossenes Ventil 18 gesperrt ist, hat dies zur Folge, dass vorhandenes Abgas aus dem Messraum 6 durch die Membran 8 in den Abgaskanal 5 verdrängt wird. Im Messraum 6 befindet sich dann nur noch Luft oder Spülgas, so dass der NOₓ-Sensor 7 von schädlichen Abgaseinflüssen befreit ist. Dieser Zustand wird in Messpausen so lange aufrechterhalten, bis eine Messphase zur Messung der NOₓ-Konzentration folgt. Zur Einleitung einer Messphase wird im dargestellten Ausführungsbeispiel gemäß Figur 2a über die Saugleitung 15 bei geöffnetem Ventil 18 Abgas in den Messraum 6 durch die Membran 8 angesaugt. Die Gasleitung 9 ist während der Messphase gesperrt. Durch die Ansaugung von Abgas in den Messraum 6 wird erreicht, das der NOₓ-Sensor 7 schnell vollständig mit Abgas beaufschlagt wird. Jetzt erfolgt die Messung der NOₓ-Konzentration für die vorgesehene Dauer der Messphase.

Dauer und Häufigkeit der Messphasen können je nach Betriebszustand der Brennkraftmaschine und/oder des Abgasnachbehandlungssystems eingestellt bzw. verändert werden.

Sobald die NOₓ-Messung durchgeführt ist, wird die Messphase beendet. Dabei wird zunächst das Ventil 18 geschlossen und dann über die Gasleitung 9 Luft oder ein sonstiges Spülgas in den Messraum 6 eingespeist.

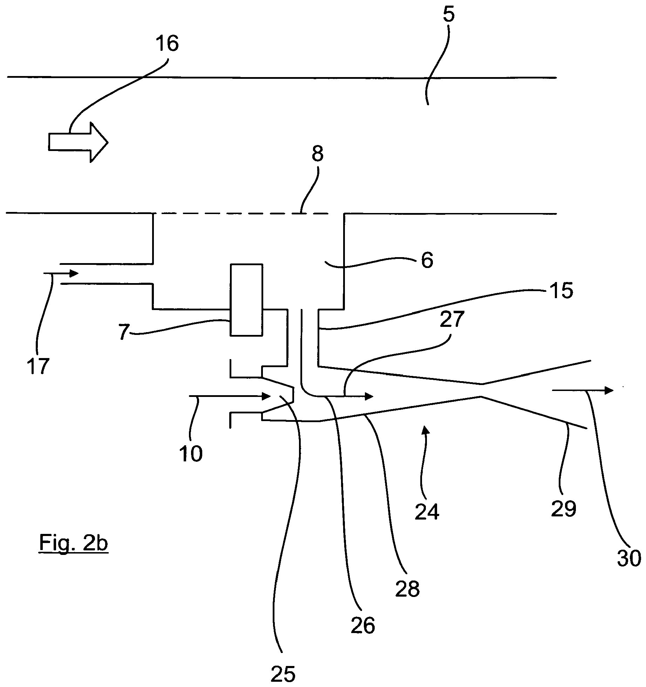

Figur 2b zeigt eine zur Figur 2a alternative Ausgestaltung, bei der die Ansaugung von Abgas in den Messraum 6 mit Hilfe einer Strahlpumpe 24 (alternativ könnte auch eine auf demselben Wirkprinzip beruhende Venturidüsenanordnung vorgesehen sein) erfolgt und als Treibmedium Druckluft oder, wie hier beispielhaft dargestellt, bei aufgeladenen Brennkraftmaschinen, komprimierte Ladeluft 10 eingesetzt wird. Die Druckluft bzw. komprimierte Ladeluft 10 tritt mit möglichst hoher Geschwindigkeit aus der Treibdüse 25 aus, wodurch gemäß dem Gesetz von Bernoulli ein dynamischer Druckabfall entsteht, der die Ansaugung von Abgas (entsprechend Pfeil 27) in die Strahlpumpe 24 bewirkt, wodurch auch Abgas in den Messraum 6 eingesaugt wird. Konkret trifft in einer Mischkammer 26 der Strahlpumpe 24 der durch die Druck- bzw. Ladeluft 10 gebildete Treibstrahl auf das Abgas, wodurch das Abgas beschleunigt und mitgerissen wird. Da das Abgas in der Mischkammer 26 beschleunigt wird, entsteht eine Saugwirkung, die weiteres Abgas über die hier als Saugstutzen ausgebildete Saugleitung 15 nachfördert. Ggf. ist für einen weiteren Druckanstieg ein Diffusor 29 nachgeschaltet. Der die Strahlpumpe 24 verlassende Mischstrom 30 kann dann zum Beispiel dem Abgassystem wieder zugeführt werden oder anderweitig verwendet werden.

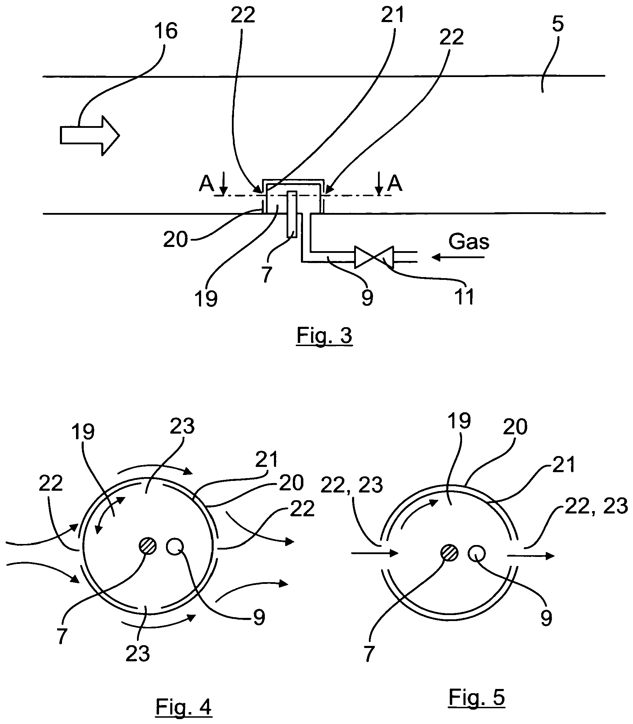

Figur 3 zeigt eine bevorzugte Ausführung eines Messraums 19, der in einem Abgaskanal 5 angeordnet ist und von zwei konzentrisch ineinander angeordneten perforierten Zylindern 20, 21 gebildet wird. Der NOₓ-Sensor 7 ragt in den Messraum 19. Eine Gasleitung 9 ist an den Messraum 19 angeschlossen, über die Luft oder Spülgas oder Kalibriergas in den Messraum 19 geleitet werden kann. Die Gasleitung 9 ist mittels eines steuerbaren Ventils 11 absperrbar.

Der äußere Zylinder 20 und der innere Zylinder 21 besitzen im dargestellten Ausführungsbeispiel jeweils um 180 Grad versetzt angeordnete Bohrungen 22, 23 (Figur 4). In Figur 3 sind diese Bohrungen 22, 23, wie in der Schnittansicht von Figur 4, nicht fluchtend angeordnet, so dass der Messraum 19 für den Abgasstrom gesperrt ist. Der innere Zylinder 21 ist jedoch gemäß dargestelltem Doppelpfeil um 90 Grad in eine Position drehbar, die in Figur 5 dargestellt ist. In dieser Position fluchten die Bohrungen 22, 23, so dass ein Teil des Abgasstroms in und durch den Messraum 19 strömen kann. In der Position gemäß Figur 5 ist der Messraum 19 für den Abgasstrom offen, so dass der NOₓ-Sensor 7 eine Messung der NOₓ-Konzentration vornehmen kann. Befindet sich dagegen der innere Zylinder 21 in der Position, wie sie in Figur 4 dargestellt ist, befindet sich das System in einer Messpause, in der Spülgas über die Gasleitung 9 in den Messraum 19 eingeführt werden kann.

An den Messraum 19 kann eine hier nicht dargestellte weitere Saugleitung angeschlossen sein, um bei geschlossenem Messraum 19 über die Gasleitung 9 ungehindert Gas einführen zu können. Die Zylinder 20, 21 können aber auch gasdurchlässige Bereiche besitzen, um den Spülvorgang mit Spülgas beschleunigt durchführen zu können.

Die vorstehend beschriebenen erfindungsgemäßen Ausführungsformen wurden lediglich beispielhaft anhand eines NOₓ-Sensors näher beschrieben. Die vorliegende Erfindung ist aber nicht darauf beschränkt und kann nicht nur dazu verwendet werden, die Lebensdauer von NOₓ- Sensoren, sondern auch von anderen Sensoren zur Bestimmung von Abgaskomponenten, zu erhöhen. Hierzu zählen u.a. NH₃- Sensoren, Lambdasensoren und Russsensoren, um nur einige Beispiele zu nennen.

## Patentansprüche

1. Verfahren zum Betrieb eines Sensors (7), der in einem Abgassystem einer Brennkraftmaschine (1) zur Ermittlung der in einem Abgasstrom enthaltenen Emissionen, insbesondere von Stickoxiden und/oder Ammoniak und/oder Sauerstoff und/oder Ruß, vorgesehen ist, wobei der Abgasstrom während Messphasen auf den Sensor (7) einwirkt und zwischen den Messphasen der Sensor (7) vom Abgasstrom zumindest weitgehend freigehalten wird, **dadurch gekennzeichnet, dass** ein den Sensor (7) umgebender Messraum (6,19) unmittelbar nach einer Messphase mit einem Spülgas, vorzugsweise mit einem unter Druck stehenden Spülgas, beaufschlagt wird, wodurch das im Messraum (6,19) vorhandene Abgas aus dem Messraum (6,19) in den Abgasstrom verdrängt wird.

2. Verfahren nach Anspruch 1, **dadurch gekennzeichnet, dass** als Spülgas Luft eingesetzt wird.

3. Verfahren nach einem der Ansprüche 1 oder 2, **dadurch gekennzeichnet, dass** der Sensor (7) in Kalibrierphasen mit einem Kalibriergas beaufschlagt wird.

4. Verfahren nach einem der vorhergehenden Ansprüche, **dadurch gekennzeichnet, dass** das Spülgas mittels eines Gebläses oder mittels eines Kompressors in den Messraum (6, 19) eingespeist wird.

5. Verfahren nach einem der vorhergehenden Ansprüche, **dadurch gekennzeichnet, dass** die Spülluft an der Druckseite des Verdichters (12) eines Abgasturboladers (2) der Brennkraftmaschine entnommen wird.

6. Verfahren nach einem der vorhergehenden Ansprüche, **dadurch gekennzeichnet, dass** die Dauer und/oder die Häufigkeit der Messphasen in Abhängigkeit von aktuellen oder von differenzierten Betriebsparametern der Brennkraftmaschine und/oder eines Abgasnachbehandlungssystems bestimmt wird, insbesondere in Abhängigkeit von Einspritzdruck und/oder Spritzbeginn und/oder Ladedruck und/oder Ladelufttemperatur und/oder Anzahl der befeuerten Motorzylinder und/oder Turboladerdrehzahl und/oder Rohemission der jeweils betrachteten Abgaskomponente und/oder Anzahl der Einspritzungen und/oder Abgastemperatur und/oder Katalysatortemperatur und/oder verwendeter Kraftstoff und/oder zugeführte Reduktionsmittelmenge bestimmt wird.

7. Verfahren nach einem der vorhergehenden Ansprüche, **dadurch gekennzeichnet, dass** in den Messphasen Abgas in den Messraum (6, 19) angesaugt wird.

8. Verfahren nach Anspruch 7, **dadurch gekennzeichnet, dass** die Ansaugung von Abgas in den Messraum (6,19) unter Verwendung des Unterdrucks auf der Frischluftsaugseite des Motors erfolgt.

9. Verfahren nach Anspruch 8, **dadurch gekennzeichnet, dass** das zur Frischluftsaugseite des Motors über den Messraum (6, 19) angesaugte Abgas über eine Schwefelfalle geführt wird, insbesondere über eine zur Bindung von Schwefeloxiden aus dem Abgas geeignete Verbindung, vorzugsweise Ca(OH)₂, Aktivkohle oder CaO, aufweisende Schwefelfalle geführt wird, mittels der der Abgasstrom zumindest teilweise von Schwefelverbindungen befreit wird.

10. Verfahren nach einem der Ansprüche 7 bis 9, **dadurch gekennzeichnet, dass** die Ansaugung von Abgas in den Messraum (6, 19) mit Hilfe einer Strahlpumpe (24) oder Venturidüse erfolgt und als Treibmedium Druckluft oder, bei aufgeladenen Brennkraftmaschinen, komprimierte Ladeluft (10) eingesetzt wird.

11. Verfahren nach einem der vorhergehenden Ansprüche, **dadurch gekennzeichnet, dass** der Messraum (6, 19) des Sensors (7) durch konzentrisch angeordnete Zylinder (20, 21) mit Bohrungen (22, 23) oder anderen Perforierungen als variabel verschließbare Durchlassöffnungen in ihren Zylinderwänden gebildet ist, wobei zur Abschirmung des Sensors (7) die Durchlassöffnungen verschlossen werden.

12. Vorrichtung mit einem Sensor (7), einem Messraum (6) und einem Gaskanal (9), zur Durchführung des Verfahrens nach einem der vorhergehenden Ansprüche,
wobei der Sensor (7) in einem Abgasregelsystem einer Brennkraftmaschine (1) zur Ermittlung der in einem Abgasstrom enthaltenen Emissionen vorgesehen ist, wobei der Sensor (7) in dem vom Abgasstrom mittels einer wenigstens teilweise gasdurchlässigen Abschirmvorrichtung abgeschirmten Messraum (6) angeordnet ist, und wobei über den Gaskanal (9) mittels einer Zuführeinrichtung und/oder eines Druckerzeugers (12) Spülgas in den Messraum (6) einleitbar ist **dadurch gekennzeichnet, dass** an den Messraum (6) eine Saugleitung (15) angeschlossen ist, über die Abgas in den Messraum (6) ansaugbar ist und
• die Saugleitung (15) über ein steuerbares Ventil (18) mit der Frischluftsaugseite der Brennkraftmaschine (1) verbindbar ist oder
• die Ansaugung von Abgas in den Messraum (6) mit Hilfe einer Strahlpumpe (24) oder Venturidüse erfolgt und als Treibmedium Druckluft oder, bei aufgeladenen Brennkraftmaschinen, komprimierte Ladeluft (10) eingesetzt wird.

13. Vorrichtung nach Anspruch 12, **dadurch gekennzeichnet, dass** als Abschirmvorrichtung eine gasdurchlässige Membran (8) zwischen Messraum (6) und Abgaskanal (5) angeordnet ist.

14. Vorrichtung nach Anspruch 12, **dadurch gekennzeichnet, dass** zur Abschirmung des Sensors konzentrisch angeordnete Zylinder (20, 21) den Messraum (19) bilden, die Bohrungen (22, 23) oder andere Perforierungen als variabel verschließbare Durchlassöffnungen in ihren Zylinderwänden aufweisen.

15. Vorrichtung nach einem der Ansprüche 12 bis 14, **dadurch gekennzeichnet, dass** über die Saugleitung (15) angesaugtes Abgas durch eine als Schwefelfalle dienende Filtereinrichtung zur Frischluftsaugseite der Brennkraftmaschine (1) strömt.

16. Vorrichtung nach einem der Ansprüche 12 bis 15, **dadurch gekennzeichnet, dass** über eine Gasleitung (9) Kalibriergas in den Messraum (6; 19) einleitbar ist.

17. Fahrzeug, insbesondere Nutzfahrzeug, mit einer Vorrichtung nach einem der Ansprüche 12 bis 16 zur Durchführung eines Verfahrens nach einem der Ansprüche 1 bis 11.

## Claims

1. Method for operating a sensor (7) which is provided in an exhaust gas system of an internal combustion engine (1) for determining the emissions contained in an exhaust gas flow, in particular, of nitrogen oxides and/or ammonia and/or oxygen and/or unburnt carbon, with the exhaust gas flow acting on the sensor (7) during measurement phases and, between the measurement phases, the sensor (7) is at least largely kept free from the exhaust gas flow, **characterized in that** a measurement space (6, 19) which surrounds the sensor (7) is exposed to a flushing gas, preferably to a pressurized flushing gas immediately after a measurement phase, as a result of which the exhaust gas present in the measurement space (6, 19) is displaced out of the measurement space (6, 19) into the exhaust gas flow.

2. Method according to Claim 1, **characterized in that** air is used as the flushing gas.

3. Method according to one of Claims 1 or 2, **characterized in that** the sensor (7) is exposed to a calibration gas in calibration phases.

4. Method according to one of the preceding claims, **characterized in that** the flushing gas is fed into the measurement space (6, 19) by means of a fan or by means of a compressor.

5. Method according to one of the preceding claims, **characterized in that** the flushing air is removed at the pressure side of the compressor (12) of an exhaust gas turbocharger (2) of the internal combustion engine.

6. Method according to one of the preceding claims, **characterized in that** the duration and/or the frequency of the measurement phases are/is determined as a function of current or of differentiated operating parameters of the internal combustion engine and/or of an exhaust gas after-treatment system, in particular as a function of injection pressure and/or start of injection and/or boost pressure and/or charge air temperature and/or number of operated engine cylinders and/or turbocharger rotational speed and/or raw emissions of the respectively considered exhaust gas components and/or number of injections and/or exhaust gas temperature and/or catalytic converter temperature and/or fuel consumed and/or quantity of reducing agent supplied.

7. Method according to one of the preceding claims, **characterized in that** exhaust gas is sucked into the measurement space (6, 19) in the measurement phases.

8. Method according to Claim 7, **characterized in that** the intake of exhaust gas into the measurement space (6, 19) is carried out using the vacuum on the fresh air intake side of the engine.

9. Method according to Claim 8, **characterized in that** the exhaust gas sucked in via the measurement space (6, 19) to the fresh air intake side of the engine is guided via a sulphur trap, in particular is guided via a sulphur trap which has a compound which is suitable for bonding sulphur oxides from the exhaust gas, preferably Ca(OH)₂, activated carbon or CaO, by means of which sulphur trap the exhaust gas flow is at least partially relieved of sulphur compounds.

10. Method according to one of Claims 7 to 9, **characterized in that** the intake of exhaust gas into the measurement space (6, 19) is carried out with the help of a jet pump (24) or Venturi nozzle and compressed air or, in the case of turbocharged internal combustion engines, compressed charge air (10) is used as the propellant.

11. Method according to one of the preceding claims, **characterised in that** the measurement space (6, 19) of the sensor (7) is formed by concentrically arranged cylinders (20, 21) having bores (22, 23) or other perforations as variably closable passage openings in their cylinder walls, wherein the passage openings are closed for shielding of the sensor (7).

12. Device with a sensor (7), a measurement space (6) and a gas channel (9), for carrying out the method according to one of the preceding claims, wherein the sensor is provided in an exhaust gas regulation system of an internal combustion engine (1) for determining the emissions contained in an exhaust gas flow, wherein the sensor (7) is arranged in the measurement space (6) shielded off from the exhaust gas flow by means of an at least partially gas-permeable shielding device, and wherein flushing gas can be introduced into the measurement space (6) via the gas channel (9) by means of a supply device and/or a pressure generator (12), **characterized in that** an intake line (15) is connected to the measurement space (6), via which intake line (15) exhaust gas can be sucked into the measurement space (6) and
• the intake line (15) can be connected via a controllable valve (18) to the fresh air intake side of the internal combustion engine (1),
• or the intake of exhaust gas into the measurement space (6) is carried out with the help of a jet pump (24) or Venturi nozzle and compressed air or, in the case of turbocharged internal combustion engines, compressed charge air (10) is used as the propellant.

13. Device according to Claim 12, **characterized in that** a gas-permeable membrane (8) is arranged between measurement space (6) and exhaust gas channel (5) as a shielding device.

14. Device according to Claim 12, **characterized in that,** for shielding of the sensor, concentrically arranged cylinders (20, 21) form the measurement space (19), which cylinders (20, 21) have bores (22, 23) or other perforations as variably closable passage openings in their cylinder walls.

15. Device according to one of claims 12 to 14, **characterised in that** exhaust gas sucked in via the intake line (15) flows through a filter device, which serves as a sulphur trap, to the fresh air intake side of the internal combustion engine (1).

16. Device according to one of Claims 12 to 15, **characterized in that** calibration gas can be introduced into the measurement space (6; 19) via a gas line (9).

17. Vehicle, in particular utility vehicle, with a device according to one of Claims 12 to 16 for carrying out a method according to one of Claims 1 to 11.

## Revendications

1. Procédé de fonctionnement d'un capteur (7), qui est prévu dans un système de gaz d'échappement d'un moteur à combustion interne (1) pour la détermination des émissions contenues dans un courant de gaz d'échappement, en particulier d'oxydes d'azote et/ou d'ammoniac et/ou d'oxygène et/ou de suie, dans lequel le courant de gaz d'échappement agit sur le capteur (7) pendant des phases de mesure et entre les phases de mesure le capteur (7) est au moins largement délesté du courant de gaz d'échappement, **caractérisé en ce que** l'on expose une chambre de mesure (6, 19) entourant le capteur (7), immédiatement après une phase de mesure, à un gaz de balayage, de préférence à un gaz de balayage sous pression, refoulant ainsi hors de la chambre de mesure (6, 19) dans le courant de gaz d'échappement les gaz d'échappement présents dans la chambre de mesure (6, 19).

2. Procédé selon la revendication 1, **caractérisé en ce que** l'on utilise l'air comme gaz de balayage.

3. Procédé selon une des revendications 1 ou 2, **caractérisé en ce que** l'on expose le capteur (7) à un gaz de calibrage pendant des phases de calibrage.

4. Procédé selon l'une quelconque des revendications précédentes, **caractérisé en ce que** l'on introduit le gaz de balayage dans la chambre de mesure (6, 19) au moyen d'un ventilateur ou au moyen d'un compresseur.

5. Procédé selon l'une quelconque des revendications précédentes, **caractérisé en ce que** l'on prélève l'air de balayage sur le côté de pression du compresseur (12) d'un turbocompresseur à gaz d'échappement (2) du moteur à combustion interne.

6. Procédé selon l'une quelconque des revendications précédentes, **caractérisé en ce que** l'on détermine la durée et/ou la fréquence des phases de mesure en fonction de paramètres de fonctionnement instantanés et différentiés du moteur à combustion interne et/ou d'un système de post-traitement des gaz d'échappement, en particulier en fonction de la pression d'injection et/ou du commencement de l'injection et/ou de la pression de suralimentation et/ou de la température de l'air de suralimentation et/ou du nombre des cylindres allumés du moteur et/ou de la vitesse de rotation du turbocompresseur et/ou des émissions brutes des composants des gaz d'échappement respectivement observés et/ou du nombre des injections et/ou de la température des gaz d'échappement et/ou de la température du catalyseur et/ou du carburant utilisé et/ou de la quantité d'agent réducteur ajoutée.

7. Procédé selon l'une quelconque des revendications précédentes, **caractérisé en ce que** l'on aspire des gaz d'échappement dans la chambre de mesure (6, 19) pendant les phases de mesure.

8. Procédé selon la revendication 7, **caractérisé en ce que** l'on effectue l'aspiration de gaz d'échappement dans la chambre de mesure (6, 19) en utilisant la dépression sur le côté d'aspiration d'air frais du moteur.

9. Procédé selon la revendication 8, **caractérisé en ce que** l'on conduit les gaz d'échappement aspirés vers le côté d'aspiration d'air frais du moteur via la chambre de mesure (6, 19) via un piège à soufre, en particulier via un piège à soufre présentant un composé approprié pour lier des oxydes de soufre hors des gaz d'échappement, de préférence du Ca(OH)₂, du charbon actif ou du CaO, au moyen duquel on débarrasse le courant de gaz d'échappement au moins partiellement de composés de soufre.

10. Procédé selon l'une quelconque des revendications 7 à 9, **caractérisé en ce que** l'on effectue l'aspiration de gaz d'échappement dans la chambre de mesure (6, 19) à l'aide d'une pompe à jet (24) ou d'une tuyère Venturi et on utilise comme fluide propulseur de l'air comprimé ou, avec des moteurs à combustion interne suralimentés, de l'air de suralimentation comprimé (10).

11. Procédé selon l'une quelconque des revendications précédentes, **caractérisé en ce que** la chambre de mesure (6, 19) du capteur (7) est formée par des cylindres disposés de façon concentrique (20, 21) avec des trous (22, 23) ou d'autres perforations à titre d'ouvertures de passage pouvant être fermées de façon variable dans leurs parois de cylindre, dans lequel on ferme les ouvertures de passage pour la protection du capteur (7).

12. Dispositif avec un capteur (7), une chambre de mesure (6) et un canal de gaz (9), pour la mise en oeuvre du procédé selon l'une quelconque des revendications précédentes,
dans lequel le capteur (7) est prévu dans un système de réglage des gaz d'échappement d'un moteur à combustion interne (1) pour la détermination des émissions contenues dans un courant de gaz d'échappement,
dans lequel le capteur (7) est disposé dans la chambre de mesure (6) protégée du courant de gaz d'échappement au moyen d'un dispositif de protection au moins partiellement perméable aux gaz, et
dans lequel un gaz de balayage peut être introduit dans la chambre de mesure (6) par le canal de gaz (9) au moyen d'un dispositif d'introduction et/ou d'un générateur de pression (12),
**caractérisé en ce qu'**une conduite d'aspiration (15) est raccordée à la chambre de mesure (6), par laquelle des gaz d'échappement peuvent être aspirés dans la chambre de mesure (6), et
• la conduite d'aspiration (15) peut être raccordée via une soupape réglable (18) au côté d'aspiration d'air frais du moteur à combustion interne (1) ou
• l'aspiration de gaz d'échappement dans la chambre de mesure (6) est effectuée à l'aide d'une pompe à jet (24) ou d'une tuyère Venturi et on utilise comme fluide propulseur de l'air comprimé ou, avec des moteurs à combustion interne suralimentés, de l'air de suralimentation comprimé (10).

13. Dispositif selon la revendication 12, **caractérisé en ce qu'**une membrane perméable aux gaz (8) est disposée entre la chambre de mesure (6) et le canal de gaz d'échappement (5) en guise de dispositif de protection.

14. Dispositif selon la revendication 12, **caractérisé en ce que** des cylindres (20, 21) disposés de façon concentrique pour la protection du capteur forment la chambre de mesure (19), et présentent des passages (22, 23) ou d'autres perforations à titre d'ouvertures de passage pouvant être fermées de façon variable dans leurs parois de cylindre.

15. Dispositif selon l'une quelconque des revendications 12 à 14, **caractérisé en ce que** des gaz d'échappement aspirés par la conduite d'aspiration (15) s'écoulent à travers un dispositif de filtre servant de piège à soufre vers le côté d'aspiration d'air frais du moteur à combustion interne (1).

16. Dispositif selon l'une quelconque des revendications 12 à 15, **caractérisé en ce qu'**un gaz de calibrage peut être introduit dans la chambre de mesure (6; 19) par une conduite de gaz (9).

17. Véhicule, en particulier véhicule utilitaire, comportant un dispositif selon l'une quelconque des revendications 12 à 16 pour la mise en oeuvre d'un procédé selon l'une quelconque des revendications 1 à 11.
